# EUROPÄISCHE PATENTSCHRIFT

(11) **EP 3 642 499 B1**
(45) Veröffentlichungstag und Bekanntmachung des Hinweises auf die Patenterteilung: **28.04.2021**
(21) Anmeldenummer: 18750382.6
(22) Anmeldetag: 31.07.2018
(51) Int. Cl.: F16C 33/10, F16C 33/12, F16C 33/14, F16C 11/06, F16C 23/04

(54) **VERBUND-BRONZELAGER**
COMPOSITE BRONZE BEARING
PALIER COMPOSITE EN BRONZE

(30) Priorität: 24.10.2017 DE 102017124813
(43) Veröffentlichungstag der Anmeldung: 29.04.2020
(73) Patentinhaber: Federal-Mogul Deva GmbH, 35260 Stadtallendorf (DE)
(72) Erfinder: HENSS, Stefan, 35392 Giessen (DE); MAUS, Jan-Ulrich, 35274 Kirchhain (DE); BUCHMANN, Michael, 81249 München (DE); AUMILLER, Markus, 86316 Friedberg (DE)
(74) Vertreter: Kurig, Thomas
(86) Internationale Anmeldenummer: PCT/EP2018/070665
(87) Internationale Veröffentlichungsnummer: WO 2019/081082

(56) Entgegenhaltungen:
- EP-A1- 0 921 211
- DE-A1- 2 729 643
- DE-A1- 19 900 942
- DE-A1-102004 055 228
- DE-A1-102005 055 708
- DE-A1-102009 037 262

## Beschreibung

Die vorliegende Erfindung betrifft ein Metall-Verbundlager mit einer Lager- bzw. Gleitschicht und einer Metall-Trägerschicht.

Es sind bereits Bronzelager bekannt, die durch Öl oder Fett und sogar durch feste Schmierstoffe geschmiert werden.

Bronzelager sind an sich seit längerem bekannt. Bronze Lagerschalen und Lagerbuchsen sind der aktuelle Standard bei Metall-Gleitlagern. Es sind bereits Bronzelager bekannt, bei denen für Gleitbuchsen, Gelenklager und/oder Kalotten Löcher in Radialrichtung und für Gleitplatten 90° zur Gleitfläche eingebracht sind, in die Festschmierstoffe, wie z.B. Graphit, PTFE oder auch Mischungen aus Festschmierstoffen, eingesetzt sind. Es sind Bronzegleitlager bekannt. Bisher werden Bronze-Lager massiv aus Lagerbronze hergestellt. Ein gattungsgemäßes Verbund-Bronzelager ist z.B aus DE 10 2009 037262 A1 bekannt.

Es ist jedoch wünschenswert, Kosten bei der Herstellung auch von Gleitlagern einzusparen. Es ist ebenfalls wünschenswert, ein Gewicht bzw. eine Masse von Gleitlagern zu verringern.

Gemäß der vorliegenden Erfindung wird ein Verbund-Bronzelager mit einer Lagerschicht aus einem Lagerbronze-Material und einer Metall-Trägerschicht bereitgestellt, die stoffschlüssig mit der Lagerschicht verbunden ist. Wie die stoffschlüssige Verbindung erreicht wird, ist bei der grundlegenden Ausführung unerheblich. Die Idee besteht hauptsächlich darin, Lagerbronzematerial einzusparen, indem ein Teil des Lagers, der nicht als Lagerfläche dient, aus einem anderen Material bzw. Metall hergestellt wird. Ein weiterer Aspekt besteht darin, ein Material verwenden zu können, das eine bessere spezifische Wärmeleitung bietet oder eine optimierte Festigkeit oder auch eine vorteilhafte Dichte aufweisen kann. Erfindungsgemäß ist das Materi der Metall Trägerschicht durch ein thermisches Spritzverfahren stoffschlüssig mit der Lagerschicht verbunden bzw. auf die Lagerschicht aufgebracht. Durch thermisches Spritzen kann einfach eine Metallschicht mit einer anderen Metallschicht stoffschlüssig verbunden werden. Ein weiterer Vorteil des thermischen Spritzens besteht darin, dass eine Außenfläche der Lagerschicht nicht gesondert und vor allem nicht präzise vorbehandelt werden muss, bevor die Metall-Trägerschicht aufgebracht wird.

Bei einer anderen beispielhaften Ausführung ist die Lagerschicht durch ein thermisches Spritzverfahren hergestellt. Hier kann die Lagerschicht beispielsweise auf einen Dorn aufgespritzt werden, bevor die Metallträgerschicht auf die aufgespritzte Lagerschicht aufgespritzt wird. Bevorzugt ist die Lagerschicht durch ein thermisches Spritzverfahren stoffschlüssig mit der Metall-Trägerschicht verbunden bzw. auf die Metall-Trägerschicht aufgebracht. In dieser Version wird die Lagerschicht auf die Trägerschicht aufgebracht, was vor allem bei Außenlagern eine Rolle spielen kann. Bei einem Außenlager dreht sich das Lager mit, während bei herkömmlichen Lagerschalen und Lagerbuchsen die Welle in der Lagerbuchse rotiert. Ein Hauptvorteil von Außenlagern besteht dabei in der größeren Lagerfläche, die damit eine höhere Belastung aufnehmen kann. Die vorliegende Erfindung eignet sich insbesondere durch das thermische Sprühen auch zur Herstellung von nicht prismatischen bzw. nicht-zylindrische Lagerschalen.

In einer weiteren bevorzugten beispielhaften Ausführungsform des Verbund-Bronzelagers ist in einem Verbindungsbereich zwischen Lagerschicht und Metall-Trägerschicht ein Materialgradient zwischen dem Lagerbronze-Material der Lagerschicht und einem Material der Metall-Trägerschicht vorhanden. Hier kann ein Stoffschluss mit einem allmählichen Übergang zwischen der Lagerschicht und der Metall-Trägerschicht erreicht werden. Dadurch kann eine besonders gute Haftung zwischen diesen Schichten erreicht werden, da quasi ein fließender Übergang zwischen den Materialien dieser Ausführung eine Grenzlinie vermeidet, an der sich die Schichten voneinander trennen können. Der Übergang kann durch thermisches Spritzen sehr leicht hergestellt werden. Zudem ergibt sich ein Übergangsbereich bei dem die Eigenschaften allmählich von denen der Lagerbronze auf die des Materials der Metall-Trägerschicht übergehen, was ein vorteilhaftes Verschleißverhalten zeigen kann.

Bei einer weiteren beispielhaften Ausführung des Verbund-Bronzelagers ist dieses mit radial verlaufenden Öffnungen versehen, in denen Festschmierstoffe angeordnet sind. Die Festschmierstoffe können dabei die Reibung des Verbundlagers deutlich verringern. Indem die Festschmierstoffe in radialen Öffnungen angeordnet sind, ergibt sich eine Möglichkeit, dass diese Fest-Schmierstoffe die Reibung des Lagers deutlich verringern.

Bei einer zusätzlichen beispielhaften Ausführung der vorliegenden Erfindung sind zylinderförmige Elemente aus Festschmierstoffen an einem Kern angeordnet, wobei die Lagerschicht durch thermisches Spritzen auf den Kern und die Elemente aus Festschmierstoffen hergestellt ist. Bei einer zusätzlichen Ausführung sind die zylinderförmigen Elemente aus Festschmierstoffen in Öffnungen in der Lagerschicht angeordnet und die Trägerschicht wird durch thermisches Spritzen von Material der Metall-Trägerschicht auf die Lagerschicht und die Elemente aus Festschmierstoffen hergestellt. Diese Ausführung betrifft ein Einspritzen der Festschmierstoffelemente in das Lagerschichtmaterial und/oder die Metall-Trägerschicht. Die Festschmierstoffe sind dann zwar eventuell nicht mehr wechselbar, können aber so dimensioniert werden, dass hinreichend viel Schmierstoff für eine geplante Einsatzdauer des Lagers vorhanden ist.

Bei einer weiteren beispielhaften Ausführung des Verbund-Bronzelagers sind die Lagerschicht und die Metall-Trägerschicht auf einen Kern aufgespritzt, wobei der Kern nach dem Aufspritzen entfernt wurde, und wobei auf dem Kern zylinder- oder kegel- oder kegelstumpf- oder domförmige Erhebungen angeordnet sind, um die Öffnungen für die Festschmierstoffe zu bilden. Die Erhebungen sind kegelstumpfförmig oder domförmig, um Abschattungseffekte beim Aufspritzen zu vermeiden oder zu verringern. In einer weiteren bevorzugten Ausführung sind die Erhebungen versetzt zueinander angeordnet, damit die Erhebungen sich beim Spritzen nicht gegenseitig abschatten. Das zugrundeliegende Verfahren bevorzugt kegelstumpfförmige Erhebungen, die überspritzt werden, woraufhin die Lagerschicht außen abgedreht wird, um die Öffnungen freizulegen bzw. zu "öffnen". Die Öffnungen können dann rund bzw. zylindrisch ausbohrt werden. Die Öffnungen können dann mit Festschmierstoff auf- bzw. ausgefüllt werden. Anschließend kann dann die zweite Schicht bzw. die Metall-Trägerschicht durch Aufspritzen aufgebracht werden. Das Herstellungsverfahren lässt sich dabei an dem fertigen Produkt erkennen, da die Öffnungen zumindest größtenteils mit Lagerbronze ausgefüllt sind.
Erfindungsgemäß umfasst die Metall-Trägerschicht Aluminium, eine Aluminiumlegierung, Eisen, eine Eisenlegierung und/oder eine Stahllegierung. Bei einer zusätzlichen bevorzugten Ausführung des Verbund-Bronzelagers besteht die Metall-Trägerschicht aus Aluminium, aus einer Aluminiumlegierung, aus Eisen, aus einer Eisenlegierung und/oder aus einer Stahllegierung.

Eine Ausführung, die ebenfalls beispielhaft ist, zeigt ein Verbund-Bronzelager deren Lagerschicht aus einem Lagerbronze-Material gegossen, stranggegossen, gesintert oder thermisch gespritzt ist.

Bei einer anderen beispielhaften Ausführung des Verbund-Bronzelagers wird die Lagerschicht vor dem Aufbringen der Metall-Trägerschicht mit Rillen in Umfangsrichtung versehen. Durch die Rillen in Umfangsrichtung kann das Verbundlager größere Kräfte in einer Axialrichtung aufnehmen, Zudem gestattet diese Ausführung, dass zwischen der Lagerschicht und der Metall-Trägerschicht eine größere Kontaktfläche gebildet wird, die ein besseres Haften der Metall-Trägerschicht an der Lagerschicht sicherstellt.

Eine zusätzliche Ausführungsform des Verbund-Bronzelager weist Rillen bzw. mindestens eine Rille auf, die Gewindegänge bilden. Anstatt mehrere Rillen anzubringen, wird hier eine einzelne oder mehrere Rillen verwendet, die auf der Fläche, auf der die Metall-Trägerschicht aufgespritzt wird, ein Gewinde bilden, wobei dieses Gewinde bzw. die sich windende Nut in einem Arbeitsgang hergestellt werden kann. Es ist bevorzugt, dass die Nuten hergestellt werden, während sich die Lagerschicht noch auf einem Kern oder Formkern befindet.

Bei einer bevorzugten beispielhaften Ausführung des Verbund-Bronzelagers sind die Rillen in Umfangsrichtung jeweils in Axialrichtung von einer axialen Mitte des Lagers jeweils nach innen geneigt. Die Querschnitte weisen dabei nach innen sodass die Metall-Trägerschicht ohne eine Abschattung in die umlaufenden Nuten eingespritzt werden kann. Anders ausgedrückt: in einem Querschnitt in Axialrichtung durch das Lager bildet die Außenfläche der Lagerschicht eine sägezahnartige Linie, deren dreieckige Erhebungen jeweils in Richtung einer axialen Mittelebene des Lagers geneigt sind.

Das Verbund-Bronzelager weist ein Volumen auf, das von der Lagerschicht, der Trägerschicht und eventuell von den vorstehend beschriebenen Festschmierstoffen ausgefüllt wird. Das Volumen der Lagerschicht soll dabei weniger als 50%, bevorzugt weniger als 30%, und weiter bevorzugt weniger als 20% des Volumens des gesamten Lagers ausmachen. Damit kann eine erhebliche Materialersparnis erreicht werden. Die Materialersparnis verstärkt sich umso mehr, je kleiner das spezifische Gewicht des Materials der Metall-Trägerschicht ist, da die Rohstoffe nach Gewicht und nicht nach Volumen gehandelt werden. Damit lässt sich ebenfalls das Gewicht des Lagers erheblich verringern, was vor allem für gewichtssensitive Anwendungen wie Raumfahrt, Luftfahrt oder auch Automotive-Anwendungen von erheblicher Bedeutung ist.
Erfindungsgemäß, wird im Verbund-Bronzelager eine Lagerschicht verwendet, deren Material eine Härte von 100 bis 300 HV, bevorzugt von 110 bis 260 HV, und weiter bevorzugt von 120 bis 180 HV aufweist.

Eine weitere Ausführungsform des Verbund-Bronzelagers weist eine sphärische Lagerfläche auf. Diese Ausführung ist als "Kugelgelenk" bzw. als Kugel-Gleitlager zu verstehen. Ein solches Lager gestattet Schwenk- und Drehbewegungen in zwei Dimensionen. Dabei kann je nach Ausführung die Bronzeschicht auf eine Kugelaußenfläche oder eine Kugelinnenfläche eines Formkörpers aufgesprüht werden. Die Kugelfläche kann dabei bereits mit Vorsprüngen versehen sein, in die später Festschmierstoffe eingesetzt werden können. Nachdem eine geeignete oder gewünschte Dicke aus Lagerbronze erreicht wurde, wird eine zweite Schicht aus einem/einer kostengünstigeren und/oder leichteren Metall/Legierung auf die Schicht aus Lagerbronze aufgebracht. So können einfach, schnell und kostengünstig Kalotten und/oder Gelenklager hergestellt werden.

Im Folgenden wird die vorliegende Erfindung anhand von schematischen nichtmaßstabgerechten Darstellungen beispielhafter Ausführungsformen beschrieben.
- Fig. 1: zeigt eine perspektivische Ansicht eines erfindungsgemäßen Verbund-Bronzelagers.
- Fig. 2-6: zeigen eine Möglichkeit einer Herstellung einer Ausführungsform eines erfindungsgemäßen Verbund-Bronzelagers.
- Fig. 7: stellt eine perspektivische Teilschnitt-Ansicht einer weiteren Ausführungsform eines erfindungsgemäßen Verbund-Bronzelagers dar.
- Fign. 8-9: zeigen anhand von Schnittansichten eine weitere Möglichkeit eine andere Ausführungsform eines erfindungsgemäßen Verbund-Bronzelagers herzustellen.
- Figuren 10-11: zeigen Ausführungen von Verbund-Bronzelagern, die sphärische Lageroberflächen aufweisen.

Sowohl in der Beschreibung als auch in den Figuren werden gleiche oder ähnliche Bezugszeichen verwendet um auf gleiche oder ähnliche Elemente und Komponenten Bezug zu nehmen.

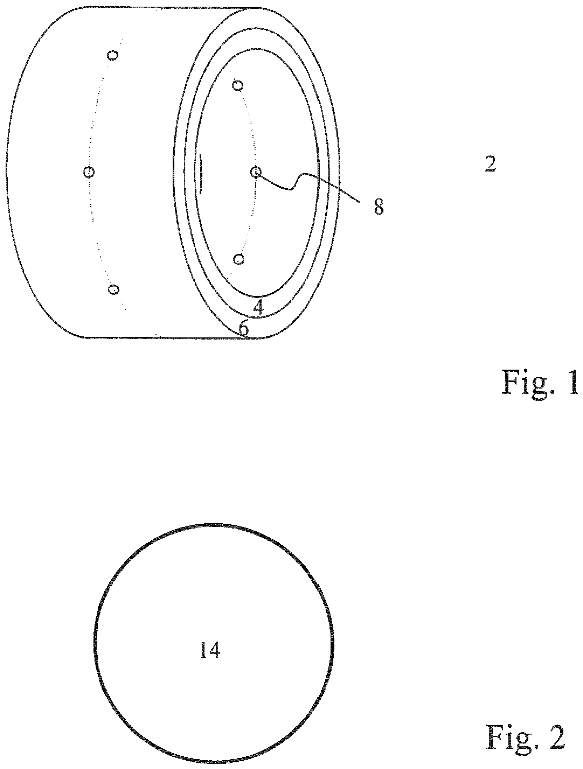

Fig. 1 zeigt eine perspektivische Ansicht eines erfindungsgemäßen Verbund-Bronzelagers. Die dargestellte Ausführungsform des Verbund-Bronzelagers 2 stellt eine Laufbuchse für eine Welle dar. Innen ist eine Lagerschicht 4 aus Lagerbronze vorgesehen, auf der außen eine Metall-Trägerschicht aufgebracht ist.

Die Lagerbuchse ist ebenfalls mit radial verlaufenden Öffnungen 8 versehen, durch die ein Schmiermittel in den Raum zwischen Laufschicht und Welle eingeführt werden kann. Es ist ebenfalls möglich, mehrere Öffnungen vorzusehen und Feststoff-Schmiermittel in den Öffnungen einzusetzen. Weiterhin besteht die Möglichkeit, anstelle einer Lagerbuchse das Verbund-Bronzelager als Lagerschalen auszuführen, wie sie beispielsweise bei der Lagerung von Kurbelwellen in Verbrennungsmotoren standardmäßig verwendet werden.

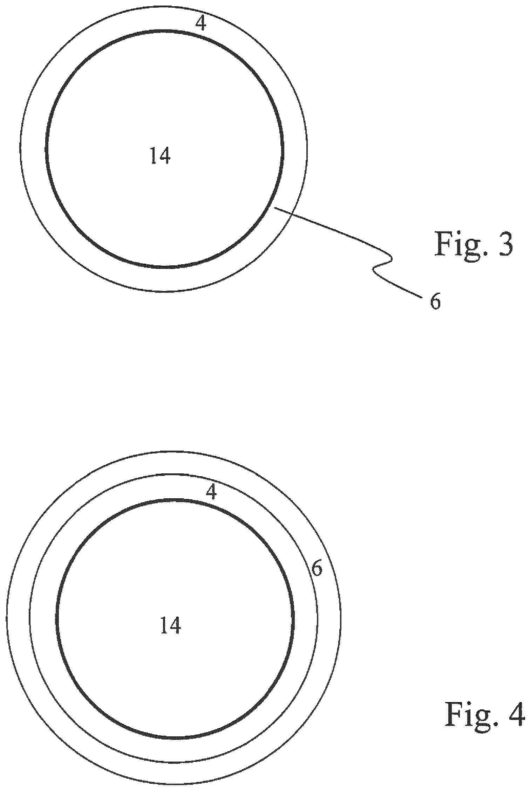

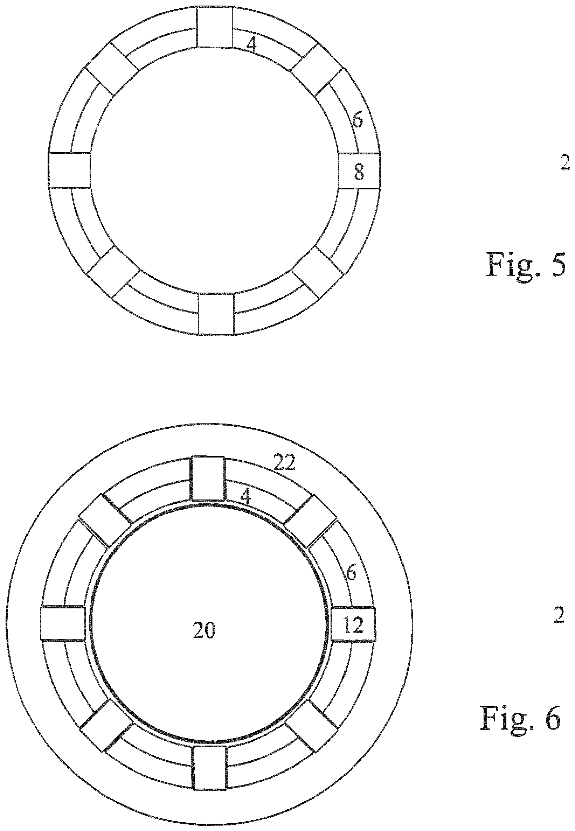

Die Figuren 2 bis 6 stellen eine Möglichkeit dar, eine Ausführungsform eines erfindungsgemäßen Verbund-Bronzelagers herzustellen. Das Verfahren kann auch auf die Schritte der Figuren 4 und 5 eingeschränkt werden. Die einzelnen Schritte zeigen dabei jeweils einen Schnitt in einer Radial-Ebene.

In der Figur 2 wird ein zylindrischer Kern 14 bereitgestellt, der in einer Querschnittsansicht gezeigt ist. Der Kern kann hier aus einem Material bestehen, das geeignet ist, eine Lager-oder Gleitschicht aus Lagerbronze aufzubringen. Es ist möglich, einen mit einem Trennmittel versehenen polierten Zylinder aus Stahl als Kern zu verwenden. Es kann jedoch ebenfalls ein "Verlorener Kern" eingesetzt werden, der bei einer Entfernung des Kerns nach einem Erzeugen der Schicht aus Lagerbronze und optional der Trägerschicht zerstört wird.

Figur 3 stellt den Kern von Figur 2 dar, auf dem eine Lagerschicht 4 aus Lagerbronze aufgebracht wurde. Es ist möglich, beispielsweise die Lagerschicht 4 zu gießen oder auf dem Kern durch thermisches Spritzen wie beispielsweise Flammspritzen oder Lichtbogen-Drahtspritzen zu erzeugen.

In Figur 4 wird eine Trägerschicht 6 auf der Lagerschicht 4 aufgebracht. Auch hier kann die Metall-Trägerschicht 6 gegossen werden. Es ist ebenfalls denkbar, die Metall-Trägerschicht durch thermisches Spritzen wie beispielsweise Flammspritzen oder Lichtbogen-Drahtspritzen auf die Lagerschicht 4 aufzubringen.

In Figur 4 ist nicht dargestellt, dass eine Außenfläche der Metall-Trägerschicht 6 nachbearbeitet wird oder werden sollte. Eine spanende Nachbearbeitung einer Außenfläche der Metall-Trägerschicht 6 wird hier ebenfalls möglich und eventuell sogar unerlässlich sein. Es kann ebenfalls möglich sein, eine Innenfläche der Lagerschicht beispielsweise durch Schleifen spanend zu bearbeiten.

In Figur 5 wurden radial verlaufende Öffnungen 8 in das Verbund-Bronzelager eingebracht Diese Öffnungen können dazu dienen, ein flüssiges, viskoses oder festes Schmiermittel in den Lagerspalt einzubringen.

Figur 6 stellt das fertige und eingebaute Verbund-Bronzelager 2 dar. Das Lager ist in eine Lageraufnahme 22 eingepresst. In den radial verlaufenden Öffnungen sind Elemente aus Festschmierstoffen 12 eingesetzt, die eine Dauerschmierung ermöglichen sollen. Als Festschmierstoffe können beispielsweise PTFE oder Graphit Verwendung finden.

In dem Bronze-Verbundlager ist eine geschliffene Welle 20 eingesetzt, die auf den Festschmierstoffen und einer Gleitfläche der Lagerschicht 4 läuft. Im Vergleich zu den herkömmlichen Lagern kann hier viel von dem kostbaren und schweren Bronzematerial eingespart werden, das die Gleitfläche des Bronze-Verbundlagers bildet. Das Bronze-Verbundlager erfordert einen etwas höheren Herstellungsaufwand, ermöglicht aber auch gleichzeitig die Verwendung von billigeren Materialien sowie - was noch wichtiger ist - leichteren Materialien, was vor allem für Anwendungen in der Raumfahrt, der Luftfahrt sowie im weiteren Fahrzeugbau immer mehr an Bedeutung gewinnt.

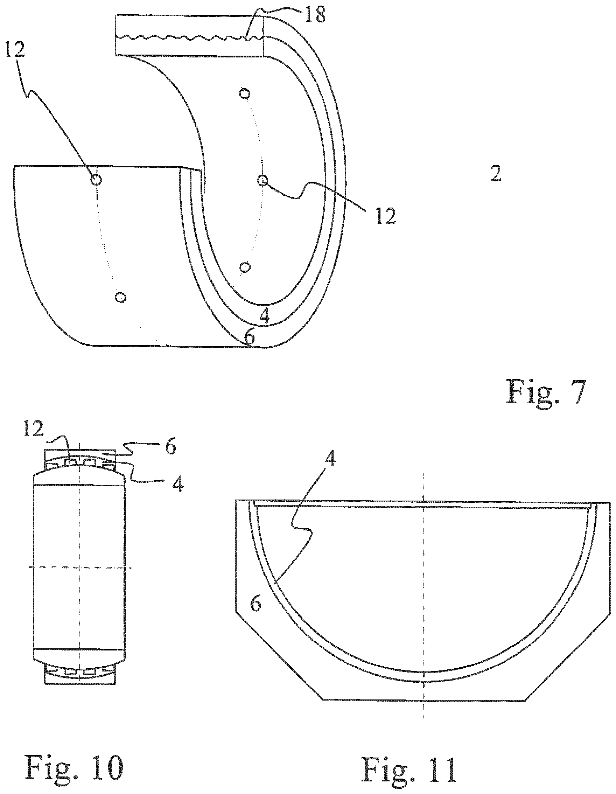

Figur 7 stellt eine perspektivische Teilschnitt-Ansicht einer weiteren Ausführungsform eines erfindungsgemäßen Verbund-Bronzelagers dar. In der Schnittfläche ist zu erkennen, dass die radial äußere Oberfläche der Gleitschicht 4 des Bronze-Verbundlagers 2 mit Rillen oder Wellen versehen ist. Durch die Rille wird die Oberfläche vergrößert wodurch eine bessere Haftung der Metall-Trägerschicht 6 an der Bronze-Laufschicht 4 erreicht werden kann. Die Rillen 18 können auch als Gewindegänge ausgeführt sein. Es ist ebenfalls möglich, die Rillen so auszuführen, dass bei einem Spritzvorgang keine abgeschatteten Bereiche auftreten, sondern alle Rillen gleichmäßig vollgespitzt werden können.

Es ist ebenfalls möglich,die radial verlaufenden Löcher in die Trägerschicht einzubringen und Elemente aus Festschmierstoffen 12 in diese Öffnungen einzusetzen, bevor die Trägerschicht aufgebracht wird. So können die Elemente aus Festschmierstoffen 12 direkt in das Bronze-Verbundlager eingegossen oder eingespritzt werden.

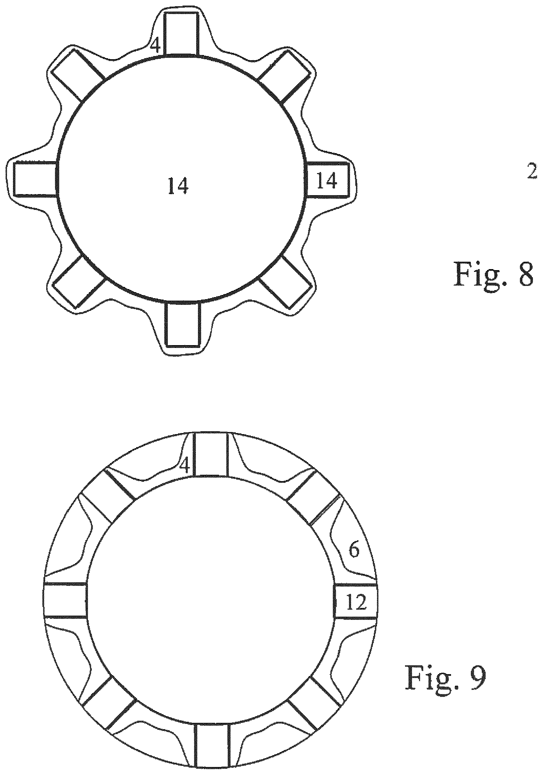

Figuren 8 und 9 zeigen Schnittansichten, die Stufen einer weiteren Möglichkeit darstellen, eine andere Ausführungsform eines erfindungsgemäßen Verbund-Bronzelagers herzustellen.

In Figur 8 ist ein Kern 14 dargestellt, auf dem zylindrische Erhebungen 16 angeordnet sind.

Diese Erhebungen können ebenfalls kegel-, kegelstumpf- oder domförmig ausgeführt sein, um Abschattungen zu vermeiden. Auf den Kern 14 und die Erhebungen 16 ist eine Lagerschicht 14 aus Lagerbronze aufgespritzt. Hier fasst die Lagerbronze auch die Erhebungen 16 ein.

In Figur 9 wurde auf den ein Kern 14 und die Lagerschicht eine Metall-Trägerschicht 6 durch thermisches Spritzen aufgebracht. Nach dem Aufspritzen der Metall-Trägerschicht 6 wurde eine Außenseite des Bronze-Verbundlagers spanend abgetragen. Der Kern wurde wie die zylindrischen Erhebungen 16 nach deren Zerstörung entfernt. Weiterhin kann die Innenfläche der Lagerschicht 4 nachbearbeitet sein. in die radialen Öffnungen wurden Elemente aus Feststoff-Schmiermitteln 12 eingesetzt. Bei einer Verwendung eines Kerns oder von Erhebungen aus einem Kunststoffmaterial kann der Kern ohne weiteres beispielsweise durch Zerspanen entfernt werden.

Figur 10 zeigt eine Ausführung eines Verbund-Bronzelagers, das als ein Kalottenlager bzw. ein Kugelgelenk ausgeführt ist. Die Lageroberfläche ist dabei sphärisch, und stützt einen Körper ab, der eine zumindest teilweise kugelförmige Lauffläche umfasst. Es sind natürlich weitere Änderungen möglich, wie das Lager als reines Kalottenlager oder als reines Kugelgelenk auszuführen. Hier dient als Welle ein Element mit einer teilweise kugelförmigen Oberfläche. Das Bronzelager umfasst eine relativ dünne Lagerschicht 4 aus Bronze in der Elemente 12 aus einem Fest-Schmierstoff eingelassen sind. Die Lagerschicht aus Bronze 4 wird von einer zweiten Metall-Trägerschicht 6 getragen, mit der das Bronze-Verbundlager in einer entsprechenden Lageraufnahme aufgenommen werden kann. Das dargestellte Lager gestattet Rotationsbewegungen um die Achse, die in Axialrichtung verläuft. Das dargestellte Lager gestattet ebenfalls leichte Schwenkbewegungen wie sie typischerweise bei einer Durchbiegung einer Achse auftreten. Die Ausführung kann auch als Gelenklager mit Kugelkalotte bezeichnet werden.

Figur 11 zeigt eine Ausführung eines Verbund-Bronzelagers, das als eine Lagerschale eines Kugelgelenk bzw. Nussgelenks ausgeführt ist. Die Lageroberfläche ist wie bei der Version der Figur 10 sphärisch, bildet jedoch eine Innen-Halbkugelfläche, die als Lauf- bzw. Lagerfläche dient. Das entsprechende Gegenstück wird durch eine (nicht dargestellte) Kugel gebildet, an der ein Stab befestigt ist. Um die Kugel sicher in der Lagerschale zu halten, wird üblicherweise ein Ring aufgesetzt, der verhindert, dass die Kugel nach oben aus der Lagerschale herausgezogen werden kann. Das Bronzelager umfasst eine relativ dünne Lagerschicht 4 aus Bronze. Elemente 12 aus einem Fest-Schmierstoff sind in der Figur 11 nicht dargestellt. Die Lagerschicht aus Bronze 4 wird von einer zweiten Metall-Trägerschicht 6 getragen, die den Großteil des Volumens des Verbundlagers ausmacht. Das dargestellte Lager gestattet Rotationsbewegungen um eine senkrechte Symmetrieachse und Schwenkbewegungen die von Abmessungen des Kugel und des Stabes abhängen.

### Bezugszeichenliste

- 2: Verbund-Bronzelager
- 4: Lagerschicht
- 6: Metall-Trägerschicht
- 8: radial verlaufende Öffnungen
- 12: Elemente aus Festschmierstoffen
- 14: Kern
- 16: zylinder- oder kegel- oder kegelstumpf- oder domförmige Erhebungen
- 18: Rillen
- 20: Welle
- 22: Lageraufnahme

## Patentansprüche

1. Verbund-Bronzelager (2), umfassend eine Lagerschicht (4) aus einem Lagerbronze-Material und eine Metall-Trägerschicht (6), die stoffschlüssig mit der Lagerschicht (4) verbunden ist, **dadurch gekennzeichnet, dass**
die Lagerschicht (4) eine Härte von 100 bis 300 HV aufweist,
die Metall-Trägerschicht (6) aus Aluminium, einer Aluminiumlegierung, Eisen, einer Eisenlegierung und/oder einer Stahllegierung besteht, und
das Material der Metall-Trägerschicht durch ein thermisches Spritzverfahren auf die Lagerschicht (4) aufgebracht ist.

2. Verbund-Bronzelager nach Anspruch 1, wobei die Lagerschicht (4) durch ein thermisches Spritzverfahren hergestellt ist.

3. Verbund-Bronzelager nach Anspruch 2, wobei in einem Verbindungsbereich zwischen Lagerschicht (4) und Metall-Trägerschicht (6) ein Materialgradient zwischen dem Lagerbronze-Material der Lagerschicht (4) und einem Material der Metall-Trägerschicht (6) vorliegt.

4. Verbund-Bronzelager nach Anspruch 2, wobei das Verbund-Bronzelager radial verlaufende Öffnungen (8) aufweist, in denen bevorzugt Festschmierstoffe (10) angeordnet sind.

5. Verbund-Bronzelager nach Anspruch 4, wobei Elemente aus Festschmierstoffen (12) an einem Kern (14) angeordnet sind und die Lagerschicht durch thermisches Spritzen auf den Kern und die Elemente aus Festschmierstoffen (12) hergestellt ist, und/oder wobei Elemente aus Festschmierstoffen (12) in Öffnungen (8) in der Lagerschicht (4) angeordnet sind und die Trägerschicht (6) durch thermisches Spritzen von Material der Metall-Trägerschicht auf die Lagerschicht (4) und die Elemente aus Festschmierstoffen (12) hergestellt ist.

6. Verbund-Bronzelager nach Anspruch 4, wobei die Lagerschicht (4) und die Metall-Trägerschicht (6) auf einen Kern (14) aufgespritzt sind, wobei der Kern (14) nach dem Aufspritzen entfernt wird, und wobei auf dem Kern zylinder- oder kegel- oder kegelstumpf- oder domförmige Erhebungen (16) angeordnet sind, um die Öffnungen für die Festschmierstoffe zu bilden.

7. Verbund-Bronzelager (2) nach Anspruch 1, wobei die Lagerschicht (4) aus einem Lagerbronze-Material gegossen, stranggegossen, gesintert oder thermisch gespritzt ist.

8. Verbund-Bronzelager (2) nach einem der vorstehenden Ansprüche, wobei die Lagerschicht (4) an einer Seite, auf der die Metall-Trägerschicht (6) aufgebracht ist, mit Rillen (18) in Umfangsrichtung versehen ist.

9. Verbund-Bronzelager nach Anspruch 8, wobei die Rillen (18) Gewindegänge bilden.

10. Verbund-Bronzelager nach Anspruch 8 oder 10, wobei die Rillen in Axialrichtung nach außen jeweils nach innen geneigt sind.

11. Verbund-Bronzelager (2) nach einem der vorstehenden Ansprüche, wobei das Volumen der Lagerschicht (4) weniger als 50% bevorzugt weniger als 30% und weiter bevorzugt weniger als 20% des Volumens des Lagers ausmacht.

12. Verbund-Bronzelager (2) nach einem der vorstehenden Ansprüche, wobei die Lagerschicht (4) eine Härte von 110 bis 260 HV und bevorzugt von 120 bis 180 HV aufweist.

13. Verbund-Bronzelager (2) nach einem der vorstehenden Ansprüche, wobei die Lagerschicht (4) eine sphärische Lageroberfläche aufweist.

## Claims

1. A composite bronze bearing (2), comprising a bearing layer (4) of a bearing bronze material and a metal support layer (6), which is connected to the bearing layer (4) by means of a substance-to-substance bond, **characterized in that**
the bearing layer (4) has a hardness of from 100 to 300 HV,
the metal support layer (6) consists of aluminum, an aluminum alloy, iron, an iron alloy, and/or a steel alloy, and
the material of the metal support layer is applied to the bearing layer (4) by means of at thermal spraying process.

2. The composite bronze bearing according to claim 1, wherein the bearing layer (4) is produced by means of a thermal spraying process.

3. The composite bronze bearing according to claim 2, wherein a material gradient between the bearing bronze material of the bearing layer (4) and a material of the metal support layer (6) is present in a connecting region between bearing layer (4) and metal support layer (6).

4. The composite bronze bearing according to claim 2, wherein the composite bronze bearing has radially running openings (8), in which solid lubricants (10) are preferably arranged.

5. The composite bronze bearing according to claim 4, wherein elements made of solid lubricants (12) are arranged at a core (14), and the bearing layer is produced by means of thermal spraying to the core and the elements made of solid lubricants (12), and/or wherein elements made of solid lubricants (12) are arranged in openings (8) in the bearing layer (4), and the support layer (6) is produced by means of thermal spraying of material of the metal support layer to the bearing layer (4) and the elements made of solid lubricants (12).

6. The composite bronze bearing according to claim 4, wherein the bearing layer (4) and the metal support layer (6) are sprayed onto a core (14), wherein the core (14) is removed after the spray-on, and wherein cylindrical or conical or frusto-conical or dome-shaped elevations (16) are arranged on the core to form the openings for the solid lubricants.

7. The composite bronze bearing (2) according to claim 1, wherein the bearing layer (4) is cast, continuously cast, sintered, or thermally sprayed of a support bronze material.

8. The composite bronze bearing (2) according to one of the preceding claims, wherein, on a side, to which the metal support layer (6) is applied, the bearing layer (4) is provided with grooves (18) in the circumferential direction.

9. The composite bronze bearing according to claim 8, wherein the grooves (18) form screw threads.

10. The composite bronze bearing according to claim 8 or 10, wherein, in the axial direction to the outside, the grooves are in each case inclined to the inside.

11. The composite bronze bearing (2) according to one of the preceding claims, wherein the volume of the support layer (4) accounts for less than 50%, preferably less than 30%, and more preferably less than 20% of the volume of the bearing.

12. The composite bronze bearing (2) according to one of the preceding claims, wherein the bearing layer (4) has a hardness of from 110 to 260 HV and preferably from 120 to 180 HV.

13. The composite bronze bearing (2) according to one of the preceding claims, wherein the bearing layer (4) has a spherical bearing surface.

## Revendications

1. Palier composite en bronze (2), comprenant une couche porteuse (4) constituée d'un matériau bronze porteur et une couche de support métallique (6) qui est liée par complémentarité de matière à la couche porteuse (4), **caractérisé en ce que** la couche porteuse (4) a une dureté de 100 à 300 HV, la couche de support métallique (6) est constituée d'aluminium, d'un alliage d'aluminium, de fer, d'un alliage de fer et/ou d'un alliage d'acier, et le matériau de la couche de support métallique est appliqué par projection thermique sur la couche porteuse (4).

2. Palier composite en bronze selon la revendication 1, dans lequel la couche porteuse (4) est réalisée par un procédé de projection thermique.

3. Palier composite en bronze selon la revendication 2, dans lequel un gradient de matière entre le matériau bronze porteur de la couche porteuse (4) et un matériau de la couche de support métallique (6) est présent dans une zone de liaison entre la couche porteuse (4) et la couche de support métallique (6).

4. Palier composite en bronze selon la revendication 2, dans lequel le palier composite en bronze présente des ouvertures s'étendant radialement (8), dans lesquelles de préférence des lubrifiants solides (10) sont disposés.

5. Palier composite en bronze selon la revendication 4, dans lequel des éléments en lubrifiants solides (12) sont disposés sur un noyau (14) et la couche porteuse est produite par projection thermique sur le noyau et les éléments en lubrifiants solides (12), et/ou avec des éléments en lubrifiants solides (12) dans des ouvertures (8) dans la couche porteuse (4) et la couche de support (6) est fabriquée par projection thermique du matériau de la couche de support métallique sur la couche porteuse (4) et les éléments en lubrifiants solides (12).

6. Palier composite en bronze selon la revendication 4, dans lequel la couche porteuse (4) et la couche de support métallique (6) sont projetées sur un noyau (14), dans lequel le noyau (14) est retiré après la pulvérisation, et dans lequel sur le noyau des élévations cylindriques ou coniques ou tronconiques ou en forme de dôme (16) sont agencées pour former les ouvertures pour les lubrifiants solides

7. Palier composite en bronze (2) selon la revendication 1, dans lequel la couche de palier (4) est coulée, coulée en continu, frittée ou pulvérisée thermiquement à partir d'un matériau de palier en bronze.

8. Palier composite en bronze (2) selon une quelconque des revendications précédentes, dans lequel la couche porteuse (4) est pourvue de rainures (18) dans la direction circonférentielle sur un côté sur lequel la couche de support métallique (6) est appliquée.

9. Palier composite en bronze selon la revendication 8, dans lequel les rainures (18) forment des filetages.

10. Palier composite en bronze selon la revendication 8 ou 10, dans lequel les rainures sont inclinées dans la direction axiale vers l'extérieur respectivement vers l'intérieur.

11. Palier composite en bronze (2) selon une des revendications précédentes, dans lequel le volume de la couche porteuse (4) représente moins de 50%, de préférence moins de 30% et plus préférentiellement moins de 20% du volume du palier.

12. Palier composite en bronze (2) selon une quelconque des revendications précédentes, dans lequel la couche porteuse (4) a une dureté de 110 à 260 HV et de préférence de 120 à 180 HV.

13. Palier composite en bronze (2) selon une quelconque des revendications précédentes, dans lequel la couche d'appui (4) a une surface d'appui sphérique.
